# EUROPÄISCHE PATENTSCHRIFT

(11) **EP 0 611 341 B1**
(45) Veröffentlichungstag und Bekanntmachung des Hinweises auf die Patenterteilung: **22.10.1997**
(21) Anmeldenummer: 93912791.6
(22) Anmeldetag: 25.05.1993
(51) Int. Cl.: B29C 43/30

(54) **FUSSBODENBELAG AUF DER BASIS VON THERMOPLASTISCHEM KUNSTSTOFFMATERIAL**
FLOOR COVERING BASED ON THERMOPLASTIC MATERIAL
REVETEMENT A BASE DE MATIERE THERMOPLASTIQUE POUR PLANCHERS

(30) Priorität: 26.05.1992 DE 4217438; 21.10.1992 DE 4235530
(43) Veröffentlichungstag der Anmeldung: 24.08.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301317
(87) Internationale Veröffentlichungsnummer: WO9324296

(56) Entgegenhaltungen:
- EP-A- 0 226 946
- EP-A- 0 321 760
- DE-A- 3 507 655
- FR-A- 1 167 760
- GB-A- 857 254
- GB-A- 2 049 540
- US-A- 2 962 081
- US-A- 3 385 722

## Beschreibung

Die Erfindung betrifft einen Fußbodenbelag auf der Basis von thermoplastischem Kunststoffmaterial mit einer dekorativen, sichtbaren Seite. Ein derartiger Fußbodenbelag ist z.B. aus der EP PS 0321760 bekannt. Der beschriebene Fußbodenbelag weist eine homogene Struktur und eine relativ hohe Verschleißfestigkeit auf. Ein solcher Fußbodenbelag ist jedoch relativ teuer, da das Verfahren zu seiner Herstellung aufwendig ist und die Ausgangsmaterialien zunächst einem komplizierten Vorgang der Herstellung von einfarbigen Granulaten oder Chips unterzogen werden müssen. Dabei ist eine genaue Dosierung von Bindemittel und Farbzusatzstoffen einzuhalten. In einer Abwandlung des Herstellungsverfahrens können auch verschiedenfarbige, in sich jedoch einfarbige Chips in einem bestimmten Mischungsverhältnis zum Ausgangsmaterial zusammengesetzt werden, wobei die Bindemittelkomponente aufgegeben und plastifiziert wird, evtl. noch weitere Bindemittelkomponenten zugegeben werden und anschließend, nach erfolgter Zugabe von allen notwendigen Stoffen, die plastifizierten Bindemittel zu einem einfarbigen Walzfell geknetet und zu einfarbigen Chips zerkleinert werden. Mehrere Chargen jeweils einfarbiger Chips werden dann einem vorgegebenen Mischungsverhältnis entsprechend miteinander vermischt und zu einem Fußbodenbelag verarbeitet. Dieser Herstellungsprozeß besteht aus mehreren Schritten und ist energieaufwendig. Durch mehrere Verarbeitungsschritte des Ausgangsmaterials, insbesondere durch Herstellung des Walzfelles, Zerkleinerung desselben zu Chips und anschließendes Aufschmelzen der Chips soweit, daß sie miteinander verschmelzen, erfolgt mehrmals die Zerstörung des "Energiegehaltes" des Materials. Außerdem muß der beschriebene Fußbodenbelag eine homogene, lunkerfreie Stuktur aufweisen, wodurch der Herstellungsvorgang noch zusätzlich eingeschränkt wird.

Aus der EP 0479054 ist ein anderes hochverdichtetes Belagsmaterial bekannt. Das hochverdichtete Material wird durch Verpressen von stückigem Kunststoff hergestellt, wobei wesentlich ist, daß das Material bei erhöhter Temperatur ein kontinuierlicher Druckanstieg stattfindet. Zur Herstellung des beschriebenen Materials werden Doppelbandpressen eingesetzt. Als Ausgangsmaterial eignen sich stückige Kunststoffe. Das Endprodukt soll eine homogene Struktur aufweisen. Diese Anforderungen an das Fertigmaterial haben zur Folge, daß beim Herstellungsprozeß hohe Drücke und hohe Temperaturen, die im Schmelzbereich der verwendeten Kunststoffe liegen, eingesetzt werden müssen.

Daneben ist aus der DE PS 35 46 184 ein anderer Fußbodenbelag aus thermoplastischen Kunststoffen bekannt, bei dem scheibenförmige Formstücke aus thermoplastischen Kunststoffen, insbesondere Abschnitte, Stücke oder Chips zu einem homogenen, keine Lunker aufweisenden Gebilde verarbeitet werden. Das Verfahren zur Herstellung des hier offenbarten Gebildes ist ähnlich aufwendig wie die oben beschriebenen. Die Formstücke müssen zunächst bei einer Termperatur ab etwa 130°C vorgesintert werden; am Ende der Sinterstrecke wird die Temperatur auf etwa 170°C erhöht, damit die Formstückschicht gleichmäßig erwärmt und zu einem Material mit einer homogenen, lunkerfreien Struktur verpreßt werden kann.

Aufgabe der vorliegenden Erfindung ist es, einen Fußbodenbelag anzugeben, der bei einem einfachen Herstellungsvorgang gebrauchsvorteilhafte Eigenschaften aufweist. Insbesondere soll der Fußbodenbelag preiswert sein und seine dekorative Ausgestaltung den Anforderungen einfach anpaßbar sein.

Diese Aufgabe ist durch den im Anspruch 1 angegebenen Fußbodenbelag gelöst. Das Verfahren zur Herstellung eines solchen Fußbodenbelags gibt Anspruch 10 an. Die Unteransprüche stellen vorteilhafte Weiterbildungen dar.

Der erfindungsgemäße Fußbodenbelag besteht aus mehreren durch Einfluß von Druck und Temperatur verdichteten und miteinander zumindestens teilweise verbundenen Schichten von Folienstücken aus thermoplastischen Kunststoffen. Es ist vorteilhaft, wenn die Folienstücke aus Abfall- und Restfolien stammen. Da Abfall- und Restfolien als Material besonders preiswert sind, ist ein daraus hergestellter Belag besonders preisgünstig. Außerdem werden durch einen derartigen Einsatz Kunststoffabfallfolien, die sonst nur aufwendigen Recyclingverfahren zugänglich sind, auf einfache Weise entsorgt. Es können selbstverständlich zur Herstellung des Belages auch neue Folien verwendet werden, wobei jedoch ein so hergestellter Fußbodenbelag teurer ist. Für manche Anwendungsgebiete ist es sinnvoll, wenn die oberste, sichtbare und musterbildende Schicht aus Stücken von neuen Folien und die anderen Schichten aus stückigem Material aus Kunststoffabfallfolien bestehen. Ein weiterer Vorteil der Verwendung von Kunststoffabfallfolien ist, daß, da das Material preisgünstig ist, auch dicke Platten, also Fliesen von ca. 10 mm Dicke und mehr wirtschaftlich hergestellt werden können.

In vorteilhafter Ausbildung kann die obere Sichtseite d.h. die begehbare Seite mit einer abriebfesteren und rutschhemmenden Oberflächenfolienschicht versehen werden. Bevorzugt ist eine Ausführungsform des Fußbodenbelages, bei dem nur Polyolefinfolienstücke eingesetzt werden. Es können aber auch Folienstücke aus verschiedenen Materialien in einem Fußbodenbelag verarbeitet werden. Vorteilhaft ist jedoch, wenn z.B. 80-90% des Materials aus Niederdruck-Polyethylen besteht und der Rest aus anderen thermoplastischen Kunststoffolien. Die unter Einfluß von Druck und Temperatur miteinander verbundenen Polyolefinfolienstücke ergeben eine glatte Oberfläche des Fußbodenbelages, so daß sie nicht genügend abrieb- und rutschfest ist. Deshalb ist es vorteilhaft, wenn auf die begehbare Oberfläche des Fußbodenbelages eine Folienschicht aufgebracht wird, durch die der Belag abriebfestere und rutschhemmende Eigenschaften erhält. Dabei kann sich um eine Folie aus Polyamid, Polyester oder bevorzugt aus ionomerem Copolymerisat von Ethylen mit Acrylsäure handeln. Zwischen einer solchen Folie und dem Folienkunststoffmaterial ist die Verbindung so gut, daß die Folie nicht als eine getrennte Schicht wahrnehmbar ist, sondern eine Einheit mit dem Kunststoffolienmaterial bildet.

Der erfindungsgemäße Fußbodenbelag weist im wesentlichen eine Struktur auf, bei der die Folienstücke bzw. schuppenartigen Folienstücke, aus denen der Fußbodenbelag besteht nur soweit miteinander verbunden sind, daß sie einen festen Zusammenhalt aufweisen. Es ist wichtig, daß der erfindungsgemäße Fußbodenbelag elastische und dämmende Eigenschaften aufweist, wobei es von Vorteil ist, wenn zwischen den einzelnen Folienstücken kleine Lufteinschlüsse bzw. Lunker, vorzugsweise im oberflächenfernen Bereich vorhanden sind, wodurch die dämmenden Eigenschaften des Fußbodenbelages herbeigeführt bzw. verbessert werden. Die Oberfläche des erfindungsgemäßen Bodenbelages ist homogen und lunkerfrei. Selbstverständlich sind bei einem dünnen, z.B. aus nur wenigen Folienschichten hergestellten Belag keine Lufteinschlüsse vorhanden. Diese Beläge sind dünn und elastisch, z.B. rollbar, jedoch weisen sie keine wesentlichen dämmenden oder trittelastischen Eigenschaften auf. Die dickwandigen Bodenbeläge haben außerdem noch den Vorteil, daß sie beim Verlegen nicht unbedingt verschweißt werden müssen, z.B. um einen Belag mit einer Dicke von 3mm herzustellen sind 60 Schichten von 50 µm dicken Folien notwendig.

Die zur Herstellung des Fußbodenbelages nach der Erfindung erforderlichen Werte von Druck und Temperatur sind niedriger als die Werte dieser Verfahrensparameter bei der Herstellung von gattungsgemäßen Fußbodenbelägen. Es ist ausreichend, wenn die Temperatur im Bereich der Erweichungstemperatur des verwendeten Kunststoffes liegt. Somit ist auch der Energieaufwand, der zur Herstellung des erfndungsgemäßen Fußbodenbelages notwendig ist, im allgemeinen niedriger. Außerdem kann durch einen anderen Druckwert die Verdichtung der Folienstücke variiert werden, wodurch Fußbodenbeläge unterschiedlicher Eigenschaften erhalten werden.

In einer besonders bevorzugten Ausführungsform der Erfindung ist vorgesehen, daß die Folienstücke eine schuppenartige oder eine räumliche Form aufweisen. Die räumliche Form kann entweder durch Recken, Tiefziehen, Einbringen von Näpfchen in ebene Folien oder durch Teilschrumpfen von ebenen Folienstücken hergestellt werden. Die Verwendung von räumlich ausgebildeten oder schuppenartigen Folienstücken bewirkt, daß insbesondere bei gewollten Lunkerstellen durch unterschiedliche Verdichtung und teilweise auch punktuelle Pressung eine bessere Wirkung als bei flachen Folien erreicht wird. Die Herstellung einer geprägten Oberfläche wird dadurch auch vereinfacht. Hinzu kommt noch der Vorteil, daß Abfallfolien oftt ungleiche Dicke und form aufweisen und immer in einer dreidimensionalen Form vorliegen, da sie durch Zerkleinerung von größeren Folienbahnen oder Folienlagen hergestellt sind. Durch die Verwendung von Abfallfolien zur Herstellung des erfindungsgemäßen Fußbodenbelages, ist dieser viel billiger als vergleichbare Fußbodenbeläge aus neuem Material, und es werden gut Kunststoffabfälle weiterverarbeitet, die sonst in nur aufwendigen Recyclingverfahren wiederaufbereitet werden können.

In einer weiteren bevorzugten Ausführungsform der Erfindung ist vorgesehen, daß die Unterseite des Fußbodenbelages mit einer die Verklebung des Belages erleichternden Schicht versehen ist. Diese Schicht besteht vorteilhafterweise aus Polyolefinmaterial und kann z.B. ein Gewebe, ein Vliesstoff oder ein aufgestreutes Material sein. Der erfindungsgemäße Fußbodenbelag weist vergleichsweise gute trittelastische und schalldämmende Eigenschaften auf. Vorteilhafterweise kann seine Querschnittsstruktur Integralstruktur sein, d.h. der eine oberflächennahe Bereich ist dabei höher verdichtet ist als der oberflächenferne Bereich. Dadurch werden die oben beschriebenen Eigenschaften des Fußbodenbelages weiter verbessert.

Ein besonderer Vorteil des erfindungsgemäßen Fußbodenbelages ist, daß seine Oberfläche einfach mit einer ein- oder mehrfarbigen Musterung versehen werden kann. Es ist ausreichend, wenn der die Oberfläche bildenden Folienschicht eine bestimmte Musterung gegeben wird, d.h. wenn diese Schicht durch Folien einer vorgegebenen farblichen Zusammensetzung und Anordnung gebildet wird. Somit entfällt bei dem erfindungsgemäßen Fußbodenbelag ein bei gattungsgemäßen Fußbodenbelägen notwendiger Färbe- bzw. Musterungsprozeß, der meistens durch Einmischen und Einschmelzen von anderen, verschiedenfarbigen Stücken durchgeführt wird. Überraschenderweise hat sich herausgestellt, daß das Verbinden von Folienstücken unter Druck- und Temperatureinfluß, welche wahllos abgelegt sind, auch zu einer dekorativen, jedoch nicht wiederholbaren Musterung der Oberflächenseite des Fußbodenbelages führt, bei der die Farben der einzelnen Folienstücke nebeneinander liegen und dekorative verwaschene Bereiche, auch farbliche Übergänge ergeben. Sollte die Oberflächenfarbmusterung abgegrenzte einzelne Strukturen, z.B. punktartige Musterung aufweisen, so kann eine solche Struktur durch einzelne, farbige, auf einem einfarbigen Hintergrund abgelegte Folienschuppen erreicht werden. Eine wiederholbare Musterung der Oberfläche ist möglich, dazu werden z.B. nach Farben oder Druckmuster sortierte Abfallfolien gezielt eingesetzt.

Der erfindungsgemäße Fußbodenbelag kann mittels einer Kalanderwalzanlage hergestellt werden. Dabei werden zu einer Bahn aufgeschüttete Schichten stückiger thermoplastischer Kunststoffolien, vorteilhafterweise Polyolefinfolien durch Druck- und Temperatureinfluß bei einer Temperatur, die im Bereich der Erweichungstemperatur des verwendeten Materials liegt, verdichtet und miteinander verbunden, so daß auch die einzelnen Stücke des Kunststoffolienmaterials mindestens teilweise miteinander verbunden werden. Anschließend kann die Oberfläche des so hergestellten Flächengebildes mit einer abriebfesten und rutschhemmenden Folienschicht, versehen werden. In einem nächsten Schritt des Verfahrens wird die Folienstückeschicht durch Druck- und Temperatureinfluß mit der Folienschicht fest verbunden Das Verfahren zur Herstellung des erfindungsgemäßen Fußbodenbelages erlaubt eine schnelle und einfache Umstellung der Produktion, z.B. auf andere Farbmuster, andere Verdichtungsgrade oder andere Abmessungen / Wandstärken des Produktes. Z.B. eine farbliche Änderung des herzustellenden Bodenbelages wird nur durch Zugabe oder Einsatz von andersfarbigen Folienschuppen erreicht. Diese Maßnahme erfordert keine Änderung des Produktionsprozesses, es können sogar abwechselnd verschiedenfarbige Bodenbeläge hergestellt werden. In Abwandlung des Verfahrens kann die abriebfeste Folienschicht auf die bereits aufgeschichteten, aber noch nicht verdichteten Folienstücke aufgetragen werden und anschließend in einem Arbeitsgang, z.B. mittels einer Kalanderwalze die Folienstückeschicht verdichtet und Folienstücke untereinander und mit der Oberflächenschicht verbunden werden.

Ein Ausführungsbeispiel der Erfindung wird anhand der nachfolgenden Figuren näher erläutert. Es zeigen:
- Fig. 1:: Eine schematische Darstellung einer Draufsicht auf einen erfindungsgemäßen Fußbodenbelag.
- Fig. 2:: Eine schematische Darstellung eines Schnittes durch den Fußbodenbelag der Fig. 1.

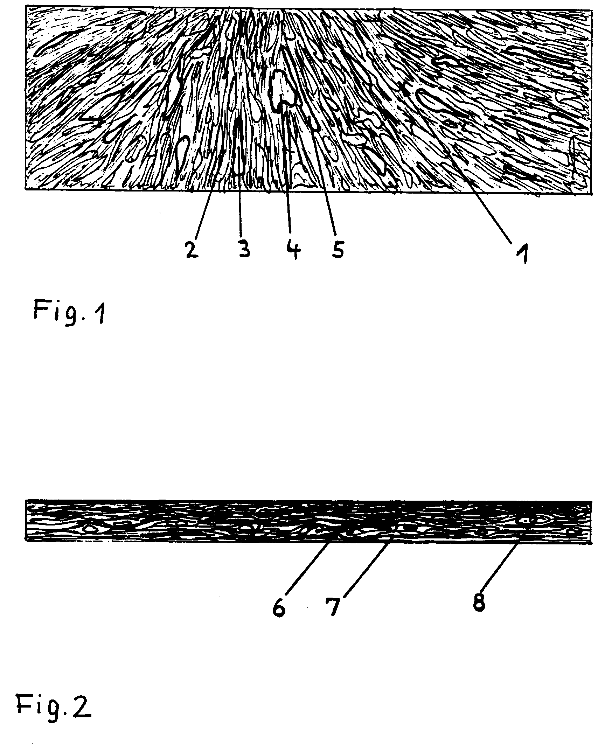

Die Oberfläche der sichtbaren, dekorativen Seite 1 des erfindungsgemäßen Fußbodenbelages ist mit einerfarblichen Musterung versehen. Die einzelnen Farbbereiche 2,3 liegen nebeneinander. Die scharf abgegrenzten farblichen Bereiche 4,5 sind durch den Einsatz von flachen, dünnen Folienschuppen entstanden. Die Struktur des Fußbodenbelages ist, wie aus Fig. 2 ersichtlich, durch einzelne Folienstücke 6,7 gebildet. Der Zusammenhalt der Folien ist fest, jedoch weist die Verbindung der einzelnen Folien insbesondere im oberflächenfernen Bereich einzelne Lufteinschlüsse 8 bzw. Lunker auf.

## Patentansprüche

1. Fußbodenbelag auf der Basis von thermoplastischem Kunststoffmaterial mit einer dekorativen, sichtbaren Seite und einer Unterseite, **dadurch gekennzeichnet**, daß er aus mehreren durch Einfluß von Druck und Temperatur verdichteten und mindestens teilweise miteinander verbundenen Schichten von Folienstücken (6,7) aus thermoplastischem Kunststoffmaterial besteht.

2. Fußbodenbelag nach Anspruch 1, **dadurch gekennzeichnet**, daß die Oberfläche der sichtbaren, begehbaren Seite des Fußbodenbelags mit einer abriebfesten und rutschhemmenden Folienschichtversehen ist.

3. Fußbodenbelag nach Anspruch 1 oder 2, **dadurch gekennzeichnet**, daß das stückige Kunststoffolienmaterial (6,7) Stücke aus Polyolefinfolien, insbesondere Polyethylenfolien sind.

4. Fußbodenbelag nach einem der vorangegangenen Ansprüche , **dadurch gekennzeichnet**, daß seine Unterseite mit einer Schicht aus Polyolefinmaterial, insbesondere einem Gewebe, einem Vliesstoff oder aufgestreutem Material versehen ist, die die Verklebung des Fußbodenbelages erleichtert.

5. Fußbodenbelag nach einem der vorangegangenen Ansprüche, **dadurch gekennzeichnet**, daß zwischen den verdichteten und miteinander verbundenen Folienstücken (6,7) Lufteinschlüsse vorhanden sind.

6. Fußbodenbelag nach einem der vorangegangenen Ansprüche, **dadurch gekennzeichne**t, daß seine Dicke zwischen 1 mm und 10 mm liegt, vorzugsweise 3 mm bis 6 mm beträgt.

7. Fußbodenbelag nach einem der vorangegangenen Ansprüche, **dadurch gekennzeichnet**, daß mindestens der eine oberflächennahe Bereich höher verdichtet ist als der oberflächenferne Bereich.

8. Fußbodenbelag nach einem der vorangegangenen Ansprüche, **dadurch gekennzeichnet**, daß die dekorative, sichtbare Seite des Belages mehrfarbig, gemustert oder einfarbig ist.

9. Fußbodenbelag nach einer der vorangegangenen Anprüche, **dadurch gekennzeichnet**, daß die Farbmusterung durch einen gezielten Einsatz von Folienstücken (6,7) erfolgt.

10. Fußbodenbelag nach einem der vorangegangenen Ansprüche, **dadurch gekennzeichnet**, daß die begehbare Seite des Fußbodenbelages mit einer Prägestruktur versehen ist.

11. Verfahren zur Herstellung eines Fußbodenbelages nach einem der Ansprüche 1 bis 10, **dadurch gekennzeichnet**, daß mehrere Schichten stückigen, thermoplastischen Kunststoffolienmaterials (6,7) zu einer Bahn abgelegt werden und durch Druck- und Temperatureinfluß bei einer Temperatur, die im Bereich der Erweichungstemperatur des verwendeten Kunststoffmaterials liegt, verdichtet werden und das stückige Kunststoffolienmaterial (6,7) mindestens teilweise miteinander verbunden wird.

12. Verfahren nach Anspruch 11, **dadurch gekennzeichnet**, daß eine abriebfeste und rutschhemmende Folie auf die noch nicht verdichtete Bahn aus stückigem Folienmaterial abgelegt wird und anschließend durch Druck- und Temperatureinfluß die Folienstückeschichten (6,7) verdichtet und untereinander und mit der Oberflächenschicht verbunden werden.

13. Verfahren nach Anspruch 11, **dadurch gekennzeichnet**, daß die Folienstückeschichten (6,7) im ersten Schritt durch Temperatur- und Druckeinfluß vorverdichtet und im zweiten Schritt mit einer Folienschicht versehen und unter nochmaligem Druck- und Temperatureinfluß mit dieser verbunden und gleichzeitig endverdichtet werden.

14. Verfahren nach einem der Ansprüche 11 bis 13, **dadurch gekennzeichnet**, daß die Verdichtung des Fußbodenbelages mittels Kalanderwalzen erfolgt.

15. Verfahren nach einem der Ansprüche 11 bis 14, **dadurch gekennzeichnet**, daß die Folienstücke (6,7) vor der Verdichtung eine räumliche, insbesondere schuppenartige Ausbildung aufweisen.

## Claims

1. Floor covering based on thermoplastic synthetic resin material with a decorative visible side and an underside, **characterised in that** it comprises a number of layers of pieces (6, 7) of sheet of thermoplastic synthetic resin material compressed and at least partially bonded together by the action of pressure and temperature.

2. Floor covering according to claim 1, **characterised in that** the surface of the visible walked upon side of the floor covering is provided with a wear-resistant and non-slip sheet layer.

3. Floor covering according to claim 1 or 2, **characterised in that** the synthetic resin sheet material (6, 7) in the form of pieces comprises pieces of polyolefin sheet, in particular polyethylene sheet.

4. Floor covering according to one of the foregoing claims, **characterised in that** its underside is provided with a layer of polyolefin material, in particular a fabric, a felt or sprayed-on material which eases the adhesion of the floor covering.

5. Floor covering according to one of the foregoing claims, **characterised in that** air inclusions are present between the compressed and bonded together pieces (6, 7) of sheet.

6. Floor covering according to one of the foregoing claims, **characterised in that** its thickness lies between 1mm and 10mm and preferably amounts to 3mm to 6mm.

7. Floor covering according to one of the foregoing claims, **characterised in that** at least the one region near the surface is compressed more than the region further from the surface.

8. Floor covering according to one of the foregoing claims, **characterised in that** the decorative visible side of the covering is given a multi-colour pattern or a single colour.

9. Floor covering according to one of the foregoing claims, **characterised in that** the coloured pattern is achieved by a deliberate insertion of pieces (6, 7) of sheet.

10. Floor covering according to one of the foregoing claims, **characterised in that** the walked-upon side of the floor covering is provided with an embossed structure.

11. Method of producing a floor covering according to one of claims 1 to 10, **characterised in that** a number of layers of thermoplastic synthetic resin sheet material (6, 7) in the form of pieces are deposited to form a strip and compressed by the action of pressure and temperature at a temperature lying in the region of the softening temperature of the plastics material employed and the pieces of plastics sheet material (6, 7) are at least partially bonded together.

12. Method according to claim 11, **characterised in that** a wear-resistant and non-slip sheet is deposited on the not-yet-compressed strip of pieces of sheet material and subsequently by the action of pressure and temperature the layers of pieces of sheet (6, 7) are compressed and bonded with each other and with the surface layer.

13. Method according to claim 11, **characterised in that** the layers (6, 7) of pieces of sheet are pre-compressed in the first step by the action of temperature and pressure and in the second step they are provided with a layer of sheet and are connected to the latter and simultaneously finally compressed by the further action of pressure and temperature.

14. Method according to one of claims 11 to 13, **characterised in that** the compression of the floor covering is achieved by means of calender rolls.

15. Method according to one of claims 11 to 14, **characterised in that** the pieces of sheet (6, 7) have a three-dimensional, in particular flake-like, form before compression.

## Revendications

1. Revêtement à base de matière thermoplastique pour planchers, avec un côté visible décoratif et un côté inférieur, caractérisé par le fait qu'il se compose de plusieurs couches de morceaux de films (6, 7) de matière thermoplastique comprimées et au moins partiellement assemblées entre elles sous l'effet de la pression et de la température.

2. Revêtement pour planchers suivant la revendication 1, caractérisé par le fait que la surface du côté visible, sur lequel on marchera, du revêtement pour planchers est pourvu d'une couche de films résistant au frottement et anti-dérapante.

3. Revêtement pour planchers suivant la revendication 1 ou 2, caractérisé par le fait que le matériau de films plastiques en morceaux (6, 7) est constitué de morceaux de films de polyoléfine, en particulier de films de polyéthylène.

4. Revêtement pour planchers suivant l'une des revendications précédentes, caractérisé par le fait que son côté inférieur est pourvu d'une couche de matériau à base de polyoléfines, en particulier un tissu, un voile ou un matériau saupoudré, qui facilite l'assemblage par collage du revêtement pour planchers.

5. Revêtement pour planchers suivant l'une des revendications précédentes, caractérisé par le fait qu'entre les morceaux de films (6, 7) comprimés et assemblés entre eux existent des inclusions d'air.

6. Revêtement pour planchers suivant l'une des revendications précédentes, caractérisé par le fait que son épaisseur se situe entre 1 mm et 10 mm, et est, de préférence, de 3 mm à 6 mm.

7. Revêtement pour planchers suivant l'une des revendications précédentes, caractérisé par le fait qu'au moins l'une zone proche de la superficie est plus comprimée que la zone éloignée de la superficie.

8. Revêtement pour planchers suivant l'une des revendications précédentes, caractérisé par le fait que le côté visible décoratif du revêtement est multicolore, à motifs ou unicolore.

9. Revêtement pour planchers suivant l'une des revendications précédentes, caractérisé par le fait que la création du motif de couleurs s'effectue par une utilisation appropriée de morceaux de films (6, 7).

10. Revêtement pour planchers suivant l'une des revendications précédentes, caractérisé par le fait que le côté sur lequel on marchera du revêtement pour planchers est pourvu d'une structure en relief.

11. Procédé de fabrication d'un revêtement pour planchers suivant l'une des revendications 1 à 10, caractérisé par le fait que plusieurs couches de matériau à base de films de matière thermoplastique en morceaux (6, 7) sont déposées pour former une nappe et sont comprimées sous l'effet de la pression et de la température, à une température qui se situe dans la plage de la température de ramollissement de la matière plastique utilisée, et que le matériau à base de films de matière plastique en morceaux (6, 7) est au moins partiellement assemblé.

12. Procédé suivant la revendication 11, caractérisé par le fait qu'il est déposé un film résistant au frottement et anti-dérapant sur la nappe non encore comprimée de matériau à base de films en morceaux et qu'ensuite, les couches de morceaux de films (6, 7) sont comprimées et assemblées entre elles et avec la couche de surface sous l'effet de la pression et de la température.

13. Procédé suivant la revendication 11, caractérisé par le fait que les couches de morceaux de films (6, 7) sont, à la première étape, précomprimées sous l'effet de la pression et de la température et, à la seconde étape, pourvues d'une couche de films et assemblées avec celle-ci et, simultanément, définitivement comprimées sous un nouvel effet de la pression et de la température.

14. Procédé suivant l'une des revendications 11 à 13, caractérisé par le fait que la compression du revêtement pour planchers se fait à l'aide de cylindres de calandrage.

15. Procédé suivant l'une des revendications 11 à 14, caractérisé par le fait que les morceaux de films (6, 7) présentent, avant la compression, une forme spatiale, en particulier en forme d'écailles.
